# EUROPEAN PATENT SPECIFICATION

(11) **EP 2 720 394 B1**
(45) Date of publication and mention of the grant of the patent: **15.04.2015**
(21) Application number: 12306243.2
(22) Date of filing: 11.10.2012
(51) Int. Cl.: H04J 14/02

(54) **Multidirectional add and drop devices for a WDM optical network**
Multidirektionale Add- und Drop-Vorrichtungen für ein optisches WDM-Netzwerk
Dispositifs d'insertion et d'extraction multidirectionnelles pour un réseau optique WDM

(43) Date of publication of application: 16.04.2014
(73) Proprietor: ALCATEL LUCENT, 92100 Boulogne-Billancourt (FR)
(72) Inventor: Zami, Thierry, 91620 NOZAY (FR); Leroy, Arnaud, 91620 NOZAY (FR)
(74) Representative: Sciaux, Edmond

(56) References cited:
- EP-A1- 1 788 833
- EP-A1- 2 426 841
- EP-A1- 2 445 129

## Description

### Field of the invention

The invention relates to the technical field of optical communication systems; in particular to network elements such as add devices, drop devices and transparent switching nodes for WDM networks.

### Background

Wavelength division multiplexing (WDM) transmission technology is a major factor in meeting the increasing needs of data transfer rates in the transmission of information. The term "transparent" is applied to a transmission system in which the signal remains optical without being converted into an electronic signal when passing through a network switching node. Transparency in optical communication networks is a characteristic that makes it possible to reduce the cost of network equipment by eliminating optical-electrical-optical conversions, and therefore the corresponding transducers. Wavelength switching nodes used in transparent WDM networks include devices known as reconfigurable optical add-drop multiplexers (ROADM) or optical cross-connects (OXC). In order to construct such devices, subsystems known as Wavelength Selective Switches (WSS) are particularly attractive. WSSs make it possible to create switching nodes having a very flexible configuration with a much simpler structure than when using discrete components, as well as a reduced size and high reliability.

Add and drop devices in WDM network elements refer to subsystems providing add and drop functions, i.e. a capability to make write-accesses and read-accesses to the WDM transport layer.

Various architectures of transparent switching nodes for WDM networks are disclosed in "Flexible Architectures for Optical Transport nodes and Networks", S. Gringeri et al., IEEE Communications Magazine, July 2010, pp40-50.

Add-drop devices are known from e.g EP 2 426 841 A1 or EP 2 445 129 A1.

### Summary

In an embodiment, the invention provides an optical network element for a WDM network, the optical network element comprising:
a plural number P of WDM inputs connectable to a corresponding plural number P of adjacent nodes of the network
optionally, a plurality of WDM outputs adapted to pass optical signals on the plurality of wavelength channels to the adjacent nodes of the network, optionally, transit lines connecting the WDM inputs to the WDM outputs, and
a multidirectional drop device, the multidirectional drop device comprising a receiver block, the receiver block comprising:
   a plurality of optical receivers each adapted to demodulate an optical signal on a selected wavelength channel,
   an optical multicasting switch comprising a plural number M of transponder-side ports connected to the plurality of optical receivers and a plural number N of network-side ports, wherein the optical multicasting switch comprises a respective optical amplifier and a respective 1-by-M optical coupler arranged at each one of the N network-side ports and a respective N-by-1 spatial selector arranged at each one of the M transponder-side ports and a plural number MxN of optical links connecting the M outputs of each optical coupler to the M spatial selectors, so as to produce a plurality of optical paths as a function of a configuration state of the spatial selectors, each optical path adapted to carry optical signals on a plurality of wavelength channels between a selected one of the network-side ports and a selected one of the transponder-side ports,
wherein the network-side ports of the optical multicasting switch comprise a subset of network-side ports that are each connected to a respective one of the WDM inputs of the optical network element to receive optical signals on the plurality of wavelength channels from the corresponding adjacent node of the network,
**characterized in that** the plural number N of the network-side ports is higher than the plural number P of the WDM inputs of the optical network element,
wherein the network-side ports of the optical multicasting switch comprise a further network-side port connected to all the WDM inputs of the optical network element through an optical protection component,
wherein the optical protection component comprises a plural number P of inputs each connected to a respective one of the WDM inputs of the optical network element to receive optical signals on the plurality of wavelength channels from the corresponding adjacent node of the network, wherein the optical protection component is adapted to pass the optical signals on the plurality of wavelength channels from each one of the inputs of the optical protection component to the further network-side port of the optical multicasting switch selectively or not selectively.

According to embodiments, such an optical network element can comprise one or more of the features below.

In embodiments, the optical protection component comprises an optical power coupler having the plural number P of inputs and adapted to merge the optical signals on the plurality of wavelength channels from all the inputs and to pass the merged signals to the further network-side port of the optical multicasting switch.

In embodiments, the optical protection component comprises an optical spatial switch having the plural number P of inputs and adapted to pass the optical signals on the plurality of wavelength channels from a selected one of the inputs to the further network-side port of the optical multicasting switch.

Similar receiver blocks may be provided in any number for the purpose of redundancy, protection against faults and increasing the capacity of the drop device.

In embodiments, the multidirectional drop device further comprises a second receiver block,
the second receiver block comprising :
a second plurality of optical receivers each adapted to demodulate an optical signal on a selected wavelength channel,
a second optical multicasting switch comprising a plural number M of transponder-side ports connected to the second plurality of optical receivers and a plural number N of network-side ports, wherein the second optical multicasting switch comprises a respective optical amplifier and a respective 1-by-M optical coupler arranged at each one of the N network-side ports and a respective N-by-1 spatial selector arranged at each one of the M transponder-side ports and a plural number MxN of optical links connecting the M outputs of each optical coupler to the M spatial selectors, so as to produce a plurality of optical paths as a function of a configuration state of the spatial selectors, each optical path adapted to carry optical signals on a plurality of wavelength channels between a selected one of the network-side ports and a selected one of the transponder-side ports,
wherein the network-side ports of the second optical multicasting switch comprise a subset of network-side ports that are each connected to a respective one of the WDM inputs of the optical network element to receive optical signals on the plurality of wavelength channels from the corresponding adjacent node of the network,
wherein the plural number N of the network-side ports is higher than the plural number P of the WDM inputs of the optical network element,
wherein the network-side ports of the second optical multicasting switch comprise a further network-side port connected to all the WDM inputs of the optical network element through the optical protection component,
wherein the optical protection component comprises a first output connected to the further network-side port of the first optical multicasting switch and a second output connected to the further network-side port of the second optical multicasting switch,
wherein the optical protection component is adapted to pass the optical signals on the plurality of wavelength channels from each one of the inputs of the optical protection component to the further network-side port of each one of the first and second optical multicasting switches selectively or not selectively.

In embodiments, the optical protection component comprises an optical power coupler having the plural number P of inputs and the first and second outputs and adapted to merge the optical signals on the plurality of wavelength channels from all the inputs and to broadcast the merged signals to the further network-side port of both the first and second optical multicasting switches.

In embodiments, the optical protection component comprises an optical spatial switching matrix comprising the plural number P of inputs and the first and second outputs, wherein the optical spatial switching matrix is adapted to produce a plurality of optical paths as a function of a configuration state, each optical path adapted to carry optical signals on the plurality of wavelength channels between a selected one of the inputs and a selected one of the outputs.

In embodiments, the optical network element further comprises a respective programmable demultiplexer associated to each of the P WDM inputs of the optical network element, the programmable demultiplexer having a first drop output connected to the subset of network-side ports of a receiver block and a second drop output connected to an input of the optical protection component.

The programmable demultiplexer may take different forms, e.g. a WSS or a combination of several WSSs arranged in parallel or in cascade. A parallel arrangement of several WSSs can be built with one or more optical power splitters. Combining several WSSs in such manner makes it possible to obtain a large number of WSSs ports while using relatively cheap WSSs.

In embodiments, the optical receivers comprise quadratic optical receivers each associated to a wavelength-tunable optical filter. Alternatively, the optical receivers may comprise tunable coherent optical receivers, which can be tuned to any wavelength channel by adapting the frequency of the local oscillator. Coherent receivers may be preferred for transmissions employing very high efficiency modulation schemes such as quadratic phase shift keying with polarization multiplexing (PDM-QPSK) or others.

In an embodiment, the invention also provides an optical network element for a WDM network, the optical network element comprising a plural number P of WDM outputs connectable to a corresponding plural number P of adjacent nodes of the network,
optionally, a plurality of WDM inputs adapted to receive optical signals on the plurality of wavelength channels from the adjacent nodes of the network, optionally, transit lines connecting the WDM inputs to the WDM outputs, and a multidirectional add device, the multidirectional add device comprising a transmitter block, the transmitter block comprising:
a plurality of optical transmitters each adapted to generate an optical signal on a selected wavelength channel,
an optical multicasting switch comprising a plural number M of transponder-side ports connected to the plurality of optical transmitters and a plural number N of network-side ports, wherein the optical multicasting switch comprises a respective optical amplifier and a respective M-by-1 optical coupler arranged at each one of the N network-side ports and a respective 1-by-N spatial selector arranged at each one of the M transponder-side ports and a plural number NxM of optical links connecting the N outputs of each spatial selector to the N optical couplers, so as to produce a plurality of optical paths as a function of a configuration state of the spatial selectors, each optical path adapted to carry optical signals on a plurality of wavelength channels between a selected one of the transponder-side ports and a selected one of the network-side ports,
wherein the network-side ports of the optical multicasting switch comprise a subset of network-side ports that are each connected to a respective one of the WDM outputs of the optical network element to pass optical signals on the plurality of wavelength channels to the corresponding adjacent node of the network,
**characterized in that** the plural number N of the network -side ports is higher than the plural number P of the WDM outputs of the optical network element,
wherein the network-side ports of the optical multicasting switch comprise a further network-side port connected to all the WDM outputs of the optical network element through an optical protection component,
wherein the optical protection component comprises a plural number P of outputs each connected to a respective one of the WDM outputs of the optical network element to pass optical signals on the plurality of wavelength channels to the corresponding adjacent node of the network, wherein the optical protection component is adapted to pass the optical signals on the plurality of wavelength channels from the further network-side port of the optical multicasting switch to each one of the outputs of the optical protection component selectively or not selectively.

According to embodiments, such an optical network element can comprise one or more of the features below.

In embodiments, the optical protection component comprises an optical power splitter having the plural number P of outputs and adapted to broadcast the optical signals on the plurality of wavelength channels from the further network-side port of the optical multicasting switch to all the outputs.

In embodiments, the optical protection component comprises an optical spatial switch having the plural number P of outputs and adapted to pass the optical signals on the plurality of wavelength channels from the further network-side port of the optical multicasting switch to a selected one of the outputs.

In embodiments, the multidirectional add device further comprises a second transmitter block,
the second transmitter block comprising :
a second plurality of optical transmitters each adapted to generate an optical signal on a selected wavelength channel,
a second optical multicasting switch comprising a plural number M of transponder-side ports connected to the second plurality of optical transmitters and a plural number N of network-side ports, wherein the second optical multicasting switch comprises a respective optical amplifier and a respective M-by-1 optical coupler arranged at each one of the N network-side ports and a respective 1-by-N spatial selector arranged at each one of the M transponder-side ports and a plural number NxM of optical links connecting the N outputs of each spatial selector to the N optical couplers, so as to produce a plurality of optical paths as a function of a configuration state of the spatial selectors, each optical path adapted to carry optical signals on a plurality of wavelength channels between a selected one of the transponder-side ports and a selected one of the network-side ports,
wherein the network-side ports of the second optical multicasting switch comprise a subset of network-side ports that are each connected to a respective one of the WDM outputs of the optical network element to pass optical signals on the plurality of wavelength channels to the corresponding adjacent node of the network,
wherein the plural number N of the network -side ports is higher than the plural number P of the WDM outputs of the optical network element,
wherein the network-side ports of the second optical multicasting switch comprise a further network-side port connected to all the WDM outputs of the optical network element through the optical protection component,
wherein the optical protection component comprises a first input connected to the further network-side port of the first optical multicasting switch and a second input connected to the further network-side port of the second optical multicasting switch,
wherein the optical protection component is adapted to pass the optical signals on the plurality of wavelength channels from the further network-side port of each one of the first and second optical multicasting switches to the outputs of the optical protection component selectively or not selectively.

In embodiments, the optical protection component comprises an optical power coupler having the plural number P of outputs and the first and second inputs and adapted to merge the optical signals on the plurality of wavelength channels from both the first and second optical multicasting switches and to broadcast the merged signals to all the outputs.

In embodiments, the optical protection component comprises an optical spatial switching matrix comprising the plural number P of outputs and the first and second inputs, wherein the optical spatial switching matrix is adapted to produce a plurality of optical paths as a function of a configuration state, each optical path adapted to carry optical signals on the plurality of wavelength channels between a selected one of the inputs and a selected one of the outputs.

In embodiments, the optical network element further comprises a respective programmable multiplexer associated to each of the P WDM outputs of the optical network element, the programmable multiplexer having a first add input connected to the subset of network-side ports of a transmitter block and a second add input connected to an output of the optical protection component.

The programmable multiplexer may take different forms, e.g. a WSS or a combination of several WSSs arranged in parallel or in cascade. A parallel arrangement of several WSSs can be built with one or more optical power combiners. Combining several WSSs in such manner makes it possible to obtain a large number of WSSs ports while using relatively cheap WSSs.

In an embodiment, the invention also provides an optical node for a WDM network, comprising the optical network element having the multidirectional drop device combined with the optical network element having the multidirectional add device, wherein the optical protection component of both the multidirectional add device and the multidirectional drop device consists of a single optical spatial switching matrix, wherein the ports of the single optical switching matrix are distributed on two sides, the optical switching matrix being adapted to generate connections between each of the ports of the first side and each of the ports of the second side,
wherein the ports of the first side of the single optical spatial switching matrix comprise the plural number P of inputs of the optical protection component of the multidirectional drop device and the first and second inputs of the optical protection component of the multidirectional add device, and
wherein the ports of the second side of the single optical spatial switching matrix comprise the plural number P of outputs of the optical protection component of the multidirectional add device and the first and second outputs of the optical protection component of the multidirectional drop device.

Aspects of the invention stem from the observation that multicasting switches based on a broadcast-and-select architecture make it possible to implement multidirectional add and drop devices with a small footprint and cost-efficiently, while involving optical amplifiers for compensating for internal optical losses of the multicasting switches. An idea at the basis of the invention is to improve the reliability of such add and/or drop devices, in particular in case of failure of an optical amplifier.

Further aspects of the invention are based on the idea of providing transparent switching nodes that offer some or all of the following features:
- High add and drop capacity,
- High cascadability resulting from low impact on transit traffic,
- Colorless ports, i.e. ability to direct any wavelength from a given WDM port to a given receiver in the drop device or from a given transmitter in the add device to a given WDM port,
- Multidirectional ports, i.e. ability to direct signals from any node input to a given port in the drop device or ability to direct signals from a given port in the add device to any node output,
- Low contention or contentionless operations,
- Progressive scalability or suitability for pay-as-you grow deployment,
- High connectivity degree,
- Protection against component faults, e.g. for applications requiring a high level of reliability as submarine transmissions,
- Cost-efficiency,
- Compact footprint.

### Brief description of the drawings

These and other aspects of the invention will be apparent from and elucidated with reference to the embodiments described hereinafter, by way of example, with reference to the drawings.
Figure 1 is a functional representation of a transparent optical switching node comprising multidirectional add and drop devices.
Figure 2 is a functional representation of a multidirectional drop device in accordance with an embodiment.
Figure 3 is a functional representation of a receiver block of the drop device of Figure 2.
Figure 4 is a functional representation of a multidirectional drop device in accordance with another embodiment.
Figure 5 is a functional representation of a transmitter block which can be employed in multidirectional add devices.
Figure 6 is a functional representation of a transparent optical switching node comprising multidirectional add and drop devices in accordance with another embodiment.

### Detailed description of the embodiments

In a transparent WDM optical network, transparent optical switching nodes are connected by optical links to form a given topology. The term "transparent" is applied to a transmission system, in which the signal remains optical without being converted into an electronic signal when passing through a network switching node. Transparency in optical communication networks is a characteristic that makes it possible to reduce the cost and power consumption of network equipment by eliminating optical-electrical-optical conversions, and therefore the corresponding transducers. Transparency can exist in some or all of the switching nodes of an optical network.

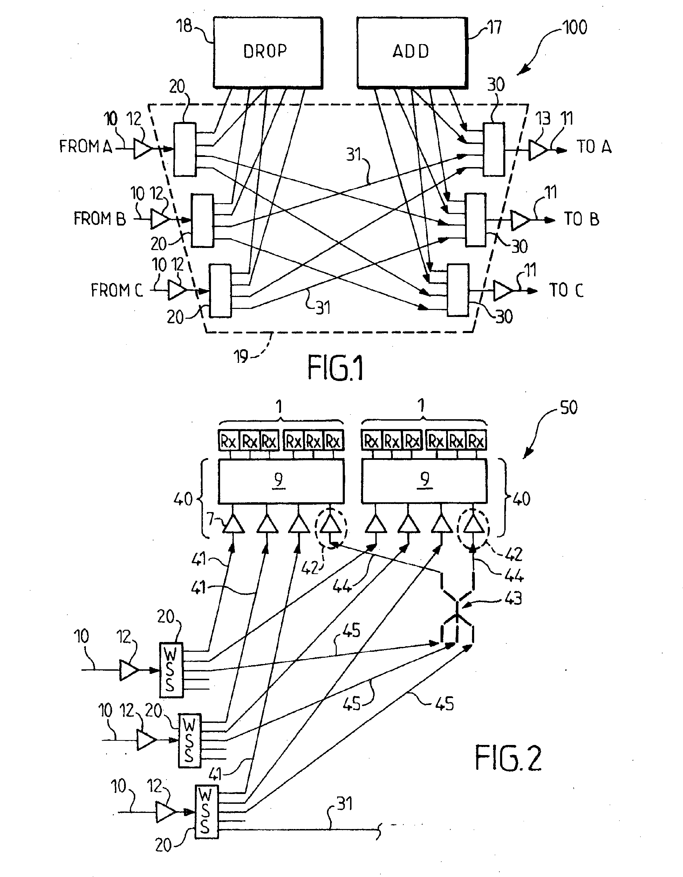

With reference to Figure 1, a transparent optical switching node 100 with degree-3 connectivity will now be described. Namely, switching node 100 can be bidirectionally connected to up to three neighbor nodes A, B and C as it comprises three WDM input lines 10 for receiving WDM traffic from the three neighbor nodes through optical links and three WDM output lines 11 for sending WDM traffic to the three neighbor nodes through optical links. The neighbor nodes and optical links are omitted on Fig. 1. Switching node 100 can be used in a transparent network or transparent network island with any topology, e.g. mesh, ring, star, tree and others. The same node architecture could be used for a different, higher or lower connectivity degree.

As shown, each WDM input line 10 may comprise an optical amplifier 12 and each WDM output line 11 may comprise an optical amplifier 13 to compensate for the losses of the node components. EDFAs can be employed as the amplifiers 12 and 13.

Each input line 10 is connected to send the WDM traffic to a respective WSS 20. Each output line 11 is connected to receive WDM traffic from a WSS 30. Between the WSSs 20 and WSSs 30, a plurality of transit lines 31 are connected to pass transit traffic from any of the input lines 10 to any of the output lines 11, except that it is not necessary to provide a transit line between a pair of input and output lines that connect to a same neighboring node. WSSs 20, WSSs 30 and transit lines 31 made up the transit section 19 of the node.

A wavelength selective switch (WSS) refers to a piece of equipment that may be used as a reconfigurable multiplexer or a reconfigurable demultiplexer. When it is acting as a multiplexer, as WSSs 30 are, a plurality of selectable ports serve as inputs, and a common port serves as an output. The wavelength selective switch comprises grating components capable of separating a WDM optical signal received at an input port into a plurality of beams corresponding to predefined non-overlapping spectral bands, and light steering means capable of steering independently the optical beam corresponding to a respective spectral band either towards the output or towards an absorber. Thereby, the spectral component of the incoming WDM signal belonging to a spectral band can be switched as a whole, i.e. either passed to the common output or blocked. The same function is achieved for each spectral band at each input.

This piece of equipment thereby carries out a reconfigurable multiplexing function on spectral bands whose optical frequencies are aligned with one or more predetermined frequency grids. It makes it possible to pass, from each input to the common output, one spectral band, multiple spectral bands, or no spectral band, selected from among the signals received at the respective input.

The switching or steering of beams within the WSS is produced by spatial light manipulation organs, such as micromirrors activated by MEMS micro-actuators or liquid crystal cells. In addition to selecting the spectral bands, these organs may be capable of adjusting the signal attenuation for each spectral band. In this manner, each WSS 30 serves to both select the spectral bands that must be passed to a given output line 11 and to adjust their output power band-by-band towards the corresponding output line 11.

Similarly, when it is acting as a demultiplexer, as WSS 20, a common port serves as an input and a plurality of selectable ports serve as outputs.

The width of the spectral bands switched by the WSSs 20 and 30 depends on the design of the WSSs. Preferably, this width is selected to match a single wavelength channel of a standard ITU grid. Alternatively, this width is selected as a multiple of a standard ITU channel spacing. Some advanced WSSs can also provide an adaptable filtering function with adjustable spectral width. This feature makes it possible to implement flexible optical frequency grids in the WDM network, i.e. so-called gridless signals. For the sake of clarity, the filter width of the WSSs 20 and 30 corresponds to a single wavelength channel of a standard ITU grid in the following non limitative example.

Each input line 10 receives a WDM signal made up of a plurality of superimposed optical signals on respective wavelength channels, e.g. 96 channels, from a corresponding adjacent node in the network A, B and C. A drop device 18 is intended to demodulate selected optical signals modulated with data to provide the data to client devices, not shown. The client devices refer to any system that interfaces with the optical switching node 100 to receive information signals transported by the WDM network, i.e. to make a read access to the WDM layer, including for example an electronic switch intended to transfer the information signals to a further network. The input WSS 20 operates to route each optical signal received from the adjacent node either to a transit line 31 or to the drop device 18 as a function of the intended destination of the signal. The drop device 18 is connected to the input WSSs 20 by drop links. A WSS 20 distributes the optical signals coming from an adjacent node based on wavelength at the filtering granularity of the WSS 20.

Similarly, an add device 17 is intended to generate optical signals modulated with data provided by the client devices, not shown, to send the modulated optical signals into the WDM network, i.e. to make a read access to the WDM layer. The add device 17 is connected to the output WSSs 30 by add links. For each adjacent node connected to the output lines 11, the output WSS 30 operates to either block or pass to the adjacent node each optical signal received from the transit lines 31 and the add links as a function of the intended destination of the signal.

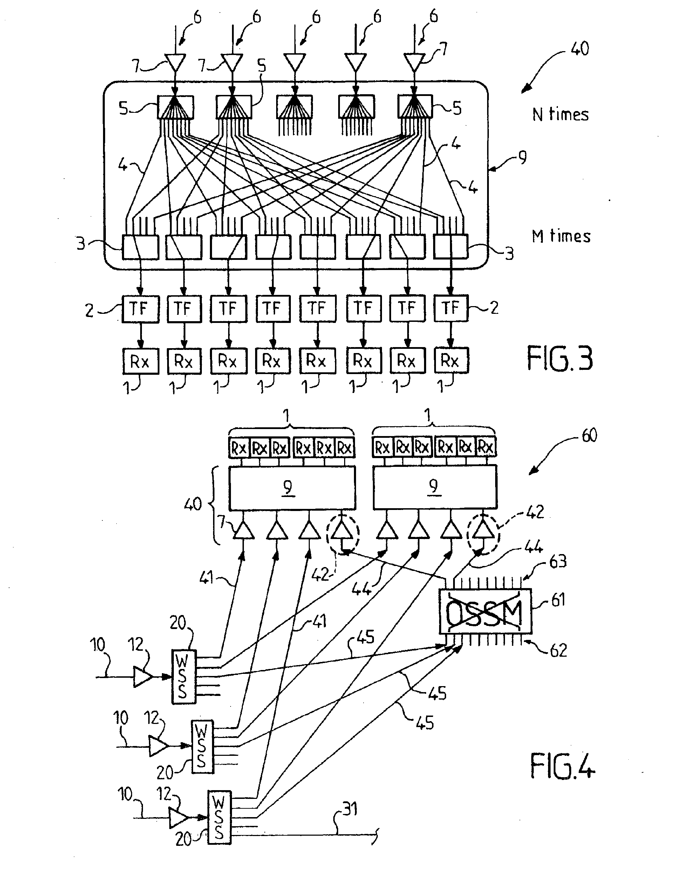

A first embodiment of a multidirectional drop device 50 suitable for the node 100 will now be described. Elements identical or similar to those of Figure 1 are designated by the same numeral. The multidirectional drop device 50 comprises two identical receiver blocks 40. The details of a receiver block 40 are illustrated on figure 3.

The receiver block 40 comprises optical receivers 1, for example quadratic receivers coupled with frequency-tunable filters 2 or coherent receivers. With a coherent receiver, it is possible to select a wavelength channel to be demodulated among a plurality of superimposed wavelength channels by finely tuning a monochromatic local oscillator. Therefore in the case where coherent receivers are used, the frequency-tunable filters 2 are not necessary. The coherent receiver may receive a single wavelength channel, i.e. a colored optical signal, or a plurality of superimposed wavelength channels, i.e. a WDM optical signal.

To route the optical signals to the receivers 1, an optical multicasting switch 9 is provided. The multicasting switch 9 comprises output ports on the receiver-side and input ports 6 on the opposite side. The multicasting switch 9 is a configurable non-blocking space switch that can be configured to generate transparent optical paths between any of its input ports and any of its output ports to pass colored or WDM optical signals independently of the wavelength thereof. In a given receiver block 40, each optical receiver 1 is connected to a respective output port of the multicasting switch 9.

More precisely, the multicasting switch 9 comprises an optical power splitter 5 at each input port 6 and an optical selector 3 at each output. In the following, N is an integer number that designates the number of input ports 6 in the receiver block 40 and M is an integer number that designates the number of output ports in the receiver block 40, i.e. the number of receivers 1 in the receiver block 40. The multicasting switch 9 is a broadcast-and-select arrangement comprising N optical power splitters 5 each of size 1-to-M, M optical selectors 3 each of size N-to-1 and N times M optical links 4 connecting each power splitter 5 to all selectors 3.

Depending on the value of M, power splitter 5 may introduce a substantial power attenuation, e.g. between 10 and 15 dB. As shown, an optical amplifier 7 is preferably connected to each input port 6 to compensate for such optical losses of the multicasting switch 9.

Turning back to Figure 2, P will designate the degree of the node in the following, i.e. P=3 in the example shown. A receiver block 40 comprises N=(P+1) inputs, i.e. P inputs each connected to a respective one of the P input WSSs 20 by a respective drop link 41, and one additional input 42 connected to a star coupler 43 by an additional drop link 44 to receive optical signals from all P input WSSs 20. Both receiver blocks 40 are made identically and connected to the same star coupler 43. The star coupler 43 has P inputs connected by P drop links 45 to each of the input WSSs 20.

The routing of the optical signals to be dropped in drop device 50 can be managed as follows. A receiver 1 must be allocated to each signal to be dropped. A signal to be dropped is routed by the input WSS 20 to one of the drop links 41. Drop links are WDM links, i.e. a plurality of optical signals on different wavelength channels can be routed together over a same drop link 41. Within the multicasting switch 9, the selectors 5 and tunable filters 2 are configured so that the optical signal is passed only to the allocated receiver 1. Since the receiver block 40 has inputs connected to all P input WSSs 20, the drop device 50 has a multidirectional property i.e. any receiver 1 can receive an optical signal from any of the neighbor nodes A, B and C.

The combined reconfigurability of the multicasting switch 9 and wavelength tunability of the optical receivers 1 make it possible to receive any of the wavelength channels on any of the receivers 1. This feature of the receiver block 40 provides some protection against receiver failures.

The receiver blocks 40 are preferably dimensioned so that it is normally not necessary to send any signal to be dropped to the star coupler 43. Rather the star coupler 43 is a protection component that serves to reroute signals to be dropped whenever one of the drop links 41 becomes inoperative, e.g. the corresponding optical amplifier 7 has broken down. Namely, in response to detecting that one of the drop links 41 has become inoperative, the WSS 20 to which the inoperative drop link 41 is connected reroutes all the optical signals from that drop link 41 to the drop link 45, so that all those optical signals reach the additional port 42 of both receiver blocks 40. The receiver block 40 that has the inoperative drop link 41 is reconfigured so that the optical receivers 1 allocated to those rerouted optical signals start receiving the rerouted optical signals from the additional port 42 of both receiver blocks 40 instead of receiving those signals from the inoperative drop link 41. The other receiver block need not be reconfigured.

Hence, the star coupler 43 connected to all input WSSs 20 and to the additional input port 42 of both receiver blocks 40 achieves a shared protection of all drop links 41. Protection is only achieved against one faulty drop link 41. Therefore, since the star coupler 43 has no filtering capability of its own, the input WSSs 20 must be configured so that the star coupler 43 simultaneously receives a single set of wavelength channels from a single input line 10. Otherwise, a spectral collision between multiple optical signals on a same wavelength channels may occur. Alternatively, the input WSSs 20 may be configured so that the star coupler 43 simultaneously receives several non-overlapping sets of wavelength channels from different input lines 10. The above-mentioned detection and reconfiguration is driven by a node controller not shown.

Dimensioning of the drop device 50 can be based on the following considerations:
- The total drop capacity needed dictates the total number of receivers 1 i.e. the total number of receivers 1 should match the total drop capacity required in the node. There usually exists a fraction of the incoming traffic in an optical element that is intended to traverse the node transparently (through-traffic). Therefore, the total drop capacity can be lower than the total number of channels in the grid times the connectivity degree of the node. This total capacity can be provided in a single receiver block 40 or distributed in a plurality of receiver blocks 40, i.e. two in the example shown.
- The number of receiver blocks 40 depends on the port count M of the multicasting switch 9. This count cannot be too high due to optical losses in the 1-to-M splitters 5. Preferably, the number M can be selected between 5 and 20, more preferably between 12 and 16.
- The number N of input port in a receiver block 40 can be P+1 or higher, e.g. P+2 in order to provide two independent protection paths. However, P+1 is a preferred value since additional protection paths would consume additional ports on the input WSSs 20, a resource that is rather expensive. The P input ports ensure that the receiver block 40 is adapted to cope simultaneously with optical signals at the same wavelength coming from each adjacent node. It is noted that the connectivity degree may grow over time with scalable architectures as described herein. The number of input ports 6 per receiver block may evolve as well provided that additional ports were initially left available in the multicasting switch 9.
- The number of inputs in the star coupler 43 is equal to the node degree P or higher. This may create considerable optical losses in certain topologies.

Turning now to Figure 4, a second embodiment of a multidirectional drop device 60 suitable for the node 100 will now be described. Elements identical to those of Figure 2 are designated by the same numeral.

This embodiment differs in that an optical space switch matrix (OSSM) 61 is substituted for the star coupler 43. The OSSM 61 may be implemented with diverse technologies, e.g. MEMS-operated reflectors or piezoelectric optical beam steering. Suitable MEMS-based OSSMs are available from manufacturers such as Calient Technologies or CrossFiber Inc. The OSSM 61 makes it possible to create simultaneously up to Q independent optical paths, where Q designates the number of ports on one side of the OSSM 61, each adapted to pass WDM optical signals between a port on the first side 62 and a port on the second side 63.

Therefore, a limitation of the first embodiment is suppressed in that the OSSM 61 makes it possible to protect the drop device 60 against two simultaneous amplifier failures among the amplifiers 7 in the two receiver blocks 40, provided that those two failures impact drop links 41 connected to different input WSSs 20.

Also important is the fact that the OSSM 61 can be designed with very limited optical losses, e.g. 2 dB. This is a very significant improvement at least for a high-degree node, e.g. P=8, versus the first embodiment.

Dimensioning of the OSSM 61 can be based on the following considerations:
- The number of ports on the network side 62 is equal to P or higher.
- The number of ports on the drop side 63 is equal to the number of receiver blocks or higher.
- The OSSM 61 may have some remaining ports left available for other functionalities.
- The number of identical receiver blocks can be varied in both the first and second embodiments, e.g. between 1 and 25, depending on required drop capacity. The node degree P can be varied as well, e.g. between 2 and 8. As a consequence, though the OSSM 61 is built with a same number of ports Q on both sides 62 and 63, a different number of ports may be consumed on each side.

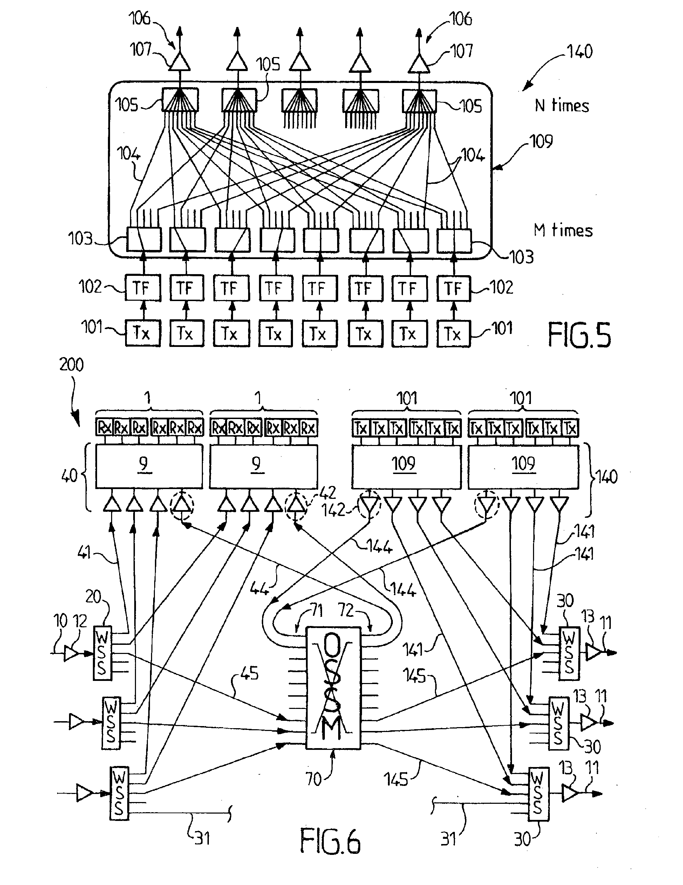

It will be appreciated that corresponding embodiments of multidirectional add devices adapted for node 100 can be easily derived from figures 2 and 4. Namely, such multidirectional add devices employ transmitter blocks 140 instead of the receiver blocks 40 and are connected to the output WSSs 30 instead of the WSSs 20. The transmitter block 140 is designed is a very similar manner to receiver block 40 and is shown on Figure 5.

In Figure 5, elements that are similar or identical to those of Figure 3 are designated by the same numeral augmented by 100. Namely, the receivers 1 are substituted with transmitters 101 and the coupler 105 and selectors 103 operate in the opposite direction in transmitter block 140. The transmitters 101 may comprise frequency-tunable lasers or broadband light sources coupled with frequency-tunable filters 102. The coupler outputs 106 are connected by add links arranged similarly to the above mentioned drop links, though directed to the WSSs 30. As the optical properties of both multicasting switches 9 and 109 are the same in both directions, the operation of the add device can be directly derived from the above description of the drop device.

With reference to Figure 6, a transparent optical switching node 200 with degree-3 connectivity will now be described. Elements identical or similar to those of the foregoing Figures are designated by the same numeral.

The OSSM 70 of Figure 6 is shared by both the multidirectional drop device and the multidirectional add device of the node. The OSSM 70 has two sides 71 and 72 and is able to generate transparent optical paths between any port of the side 71 and any port of the other side 72.

As shown, the add device and the drop device are connected to the OSSM 70 in a reversed manner. Namely, the OSSM ports on the side 71 serve to connect the drop links 45 of the drop device and the add links 144 of the add device, whereas the OSSM ports on the side 72 serve to connect the drop links 44 of the drop device and the add links 145 of the add device. Thus, the number of ports used on side 71 is equal to the node degree P plus the number of transmitter blocks 140. The number of ports used on side 72 is equal to the node degree P plus the number of receiver blocks 40. As a consequence, assuming the node has a similar number of transmitter blocks 140 and receiver blocks 40, the OSSM 70 can be used symmetrically, i.e. a same number of ports are consumed on both sides. By contrast, the embodiment of Figure 4 would frequently result in a dissymmetrical consumption of OSSM ports.

Again, The OSSM 70 may have some remaining ports left available for other functionalities.

In an embodiment, a degree-8 node operating with a 96-wavelength channels grid and 50% drop capacity can be built with about 400 receivers distributed in about 25 blocks of 16 receivers each.

Although the above description relates mainly to transparent switching nodes equipped with add and drop devices, it should be noted that the illustrated drop devices and add devices can be built as independent network elements, i.e. terminals without a transit function. As an example a drop device terminal can be easily deduced from Fig. 4 by omitting the transit lines 31. A corresponding add device terminal, although not shown, can be easily deduced by substituting the receivers with transmitters and inversing all the optical amplifiers.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical network element (100, 200) for a WDM network, the optical network element comprising:
a plural number P of WDM inputs (10) connectable to a corresponding plural number P of adjacent nodes of the network, and
a multidirectional drop device (50, 60), the multidirectional drop device comprising a receiver block (40), the receiver block (40) comprising:
a plurality of optical receivers (1) each adapted to demodulate an optical signal on a selected wavelength channel,
an optical multicasting switch (9) comprising a plural number M of transponder-side ports connected to the plurality of optical receivers (1) and a plural number N of network-side ports, wherein the optical multicasting switch comprises a respective optical amplifier (7) and a respective 1-by-M optical coupler (5) arranged at each one of the N network-side ports and a respective N-by-1 spatial selector (3) arranged at each one of the M transponder-side ports and a plural number MxN of optical links (4) connecting the M outputs of each optical coupler to the M spatial selectors, so as to produce a plurality of optical paths as a function of a configuration state of the spatial selectors, each optical path adapted to carry optical signals on a plurality of wavelength channels between a selected one of the network-side ports and a selected one of the transponder-side ports,
wherein the network-side ports (6) of the optical multicasting switch comprise a subset of network-side ports (41) that are each connected to a respective one of the WDM inputs (10) of the optical network element to receive optical signals on the plurality of wavelength channels from the corresponding adjacent node of the network,
**characterized in that** the plural number N of the network-side ports is higher than the plural number P of the WDM inputs (10) of the optical network element,
wherein the network-side ports of the optical multicasting switch comprise a further network-side port (42, 44) connected to all the WDM inputs (10) of the optical network element through an optical protection component (43, 61, 70),
wherein the optical protection component (43, 61, 70) comprises a plural number P of inputs (45) each connected to a respective one of the WDM inputs (10) of the optical network element to receive optical signals on the plurality of wavelength channels from the corresponding adjacent node of the network, wherein the optical protection component is adapted to pass the optical signals on the plurality of wavelength channels from each one of the inputs of the optical protection component to the further network-side port (42, 45) of the optical multicasting switch selectively or not selectively.

2. An optical network element in accordance with claim 1, wherein the optical protection component comprises an optical power coupler (43) having the plural number P of inputs and adapted to merge the optical signals on the plurality of wavelength channels from all the inputs and to pass the merged signals to the further network-side port (42, 44) of the optical multicasting switch.

3. An optical network element in accordance with claim 1, wherein the optical protection component (61, 70) comprises an optical spatial switch having the plural number P of inputs and adapted to pass the optical signals on the plurality of wavelength channels from a selected one of the inputs (45) to the further network-side port (44, 42) of the optical multicasting switch.

4. An optical network element in accordance with claim 1, wherein the multidirectional drop device further comprises a second receiver block (40),
the second receiver block (40) comprising :
a second plurality of optical receivers (1) each adapted to demodulate an optical signal on a selected wavelength channel,
a second optical multicasting switch (9) comprising a plural number M of transponder-side ports connected to the second plurality of optical receivers (1) and a plural number N of network-side ports, wherein the second optical multicasting switch comprises a respective optical amplifier (7) and a respective 1-by-M optical coupler (5) arranged at each one of the N network-side ports and a respective N-by-1 spatial selector (3) arranged at each one of the M transponder-side ports and a plural number MxN of optical links (4) connecting the M outputs of each optical coupler to the M spatial selectors, so as to produce a plurality of optical paths as a function of a configuration state of the spatial selectors, each optical path adapted to carry optical signals on a plurality of wavelength channels between a selected one of the network-side ports and a selected one of the transponder-side ports, wherein the network-side ports (6) of the second optical multicasting switch comprise a subset of network-side ports (41) that are each connected to a respective one of the WDM inputs (10) of the optical network element to receive optical signals on the plurality of wavelength channels from the corresponding adjacent node of the network,
wherein the plural number N of the transponder-side ports is higher than the plural number P of the WDM inputs (10) of the optical network element,
wherein the network-side ports of the second optical multicasting switch comprise a further network-side port (42, 44) connected to all the WDM inputs (10) of the optical network element through the optical protection component (43, 61, 70),
wherein the optical protection component (43, 61, 70) comprises a first output (44) connected to the further network-side port (42) of the first optical multicasting switch and a second output (44) connected to the further network-side port (42) of the second optical multicasting switch,
wherein the optical protection component (43, 61, 70) is adapted to pass the optical signals on the plurality of wavelength channels from each one of the inputs of the optical protection component to the further network-side port of each one of the first and second optical multicasting switches selectively or not selectively.

5. An optical network element in accordance with claim 4, wherein the optical protection component comprises an optical power coupler (43) having the plural number P of inputs (45) and the first and second outputs and adapted to merge the optical signals on the plurality of wavelength channels from all the inputs and to broadcast the merged signals to the further network-side port (42) of both the first and second optical multicasting switches (9).

6. An optical network element in accordance with claim 4, wherein the optical protection component comprises an optical spatial switching matrix (61, 70) comprising the plural number P of inputs (45) and the first and second outputs (44), wherein the optical spatial switching matrix is adapted to produce a plurality of optical paths as a function of a configuration state, each optical path adapted to carry optical signals on the plurality of wavelength channels between a selected one of the inputs and a selected one of the outputs.

7. An optical network element in accordance with any one of claims 1 to 6, further comprising a respective programmable demultiplexer (20) associated to each of the P WDM inputs (10) of the optical network element, the programmable demultiplexer having a first drop output (41) connected to the subset of network-side ports of a receiver block and a second drop output (45) connected to an input of the optical protection component (43, 61, 70).

8. An optical network element (100, 200) for a WDM network, the optical network element comprising a plural number P of WDM outputs (11) connectable to a corresponding plural number P of adjacent nodes of the network and a multidirectional add device, the multidirectional add device comprising a transmitter block (140),
the transmitter block (140) comprising:
a plurality of optical transmitters (101) each adapted to generate an optical signal on a selected wavelength channel,
an optical multicasting switch (109) comprising a plural number M of transponder-side ports connected to the plurality of optical transmitters (101) and a plural number N of network-side ports, wherein the optical multicasting switch comprises a respective optical amplifier (107) and a respective M-by-1 optical coupler (105) arranged at each one of the N network-side ports and a respective 1-by-N spatial selector (103) arranged at each one of the M transponder-side ports and a plural number NxM of optical links (104) connecting the N outputs of each spatial selector to the N optical couplers, so as to produce a plurality of optical paths as a function of a configuration state of the spatial selectors, each optical path adapted to carry optical signals on a plurality of wavelength channels between a selected one of the transponder-side ports and a selected one of the network-side ports (106),
wherein the network-side ports (106) of the optical multicasting switch comprise a subset of network-side ports (141) that are each connected to a respective one of the WDM outputs (11) of the optical network element to pass optical signals on the plurality of wavelength channels to the corresponding adjacent node of the network,
**characterized in that** the plural number N of the transponder-side ports is higher than the plural number P of the WDM outputs (11) of the optical network element,
wherein the network-side ports of the optical multicasting switch comprise a further network-side port (142) connected to all the WDM outputs (11) of the optical network element through an optical protection component (70),
wherein the optical protection component (70) comprises a plural number P of outputs (145) each connected to a respective one of the WDM outputs (11) of the optical network element to pass optical signals on the plurality of wavelength channels to the corresponding adjacent node of the network, wherein the optical protection component is adapted to pass the optical signals on the plurality of wavelength channels from the further network-side port of the optical multicasting switch to each one of the outputs of the optical protection component selectively or not selectively.

9. An optical network element in accordance with claim 8, wherein the optical protection component comprises an optical power splitter having the plural number P of outputs and adapted to broadcast the optical signals on the plurality of wavelength channels from the further network-side port (142) of the optical multicasting switch to all the outputs (145).

10. An optical network element in accordance with claim 8, wherein the optical protection component comprises an optical spatial switch (70) having the plural number P of outputs (145) and adapted to pass the optical signals on the plurality of wavelength channels from the further network-side port of the optical multicasting switch to a selected one of the outputs.

11. An optical network element in accordance with claim 8, wherein the multidirectional add device further comprises a second transmitter block (140),
the second transmitter block (140) comprising :
a second plurality of optical transmitters (101) each adapted to generate an optical signal on a selected wavelength channel,
a second optical multicasting switch (109) comprising a plural number M of transponder-side ports connected to the second plurality of optical transmitters (101) and a plural number N of network-side ports, wherein the second optical multicasting switch comprises a respective optical amplifier (107) and a respective M-by-1 optical coupler (105) arranged at each one of the N network-side ports and a respective 1-by-N spatial selector (103) arranged at each one of the M transponder-side ports and a plural number NxM of optical links (104) connecting the N outputs of each spatial selector to the N optical couplers, so as to produce a plurality of optical paths as a function of a configuration state of the spatial selectors, each optical path adapted to carry optical signals on a plurality of wavelength channels between a selected one of the transponder-side ports and a selected one of the network-side ports (106),
wherein the network-side ports (106) of the second optical multicasting switch comprise a subset of network-side ports (141) that are each connected to a respective one of the WDM outputs (11) of the optical network element to pass optical signals on the plurality of wavelength channels to the corresponding adjacent node of the network,
wherein the plural number N of the transponder-side ports is higher than the plural number P of the WDM outputs (11) of the optical network element,
wherein the network-side ports of the second optical multicasting switch comprise a further network-side port (142) connected to all the WDM outputs (11) of the optical network element through the optical protection component (70),
wherein the optical protection component (70) comprises a first input (144) connected to the further network-side port (142) of the first optical multicasting switch and a second input (144) connected to the further network-side port (142) of the second optical multicasting switch,
wherein the optical protection component (70) is adapted to pass the optical signals on the plurality of wavelength channels from the further network-side port (142) of each one of the first and second optical multicasting switches to the outputs (145) of the optical protection component selectively or not selectively.

12. An optical network element in accordance with claim 11, wherein the optical protection component comprises an optical power coupler having the plural number P of outputs (145) and the first and second inputs (144) and adapted to merge the optical signals on the plurality of wavelength channels from both the first and second optical multicasting switches and to broadcast the merged signals to all the outputs.

13. An optical network element in accordance with claim 11, wherein the optical protection component comprises an optical spatial switching matrix (70) comprising the plural number P of outputs (145) and the first and second inputs (144), wherein the optical spatial switching matrix is adapted to produce a plurality of optical paths as a function of a configuration state, each optical path adapted to carry optical signals on the plurality of wavelength channels between a selected one of the inputs and a selected one of the outputs.

14. An optical network element in accordance with any one of claims 8 to 13, further comprising a respective programmable multiplexer (30) associated to each of the P WDM outputs (11) of the optical network element, the programmable multiplexer having a first add input (141) connected to the subset of network-side ports of a transmitter block and a second add input (145) connected to an output of the optical protection component (70).

15. An optical node (200) for a WDM network, comprising an optical network element in accordance with claim 13 or 14 combined with an optical network element in accordance with claim 6 or 7, wherein the optical protection component of both the multidirectional add device and the multidirectional drop device consists of a single optical spatial switching matrix (70), wherein the ports of the optical switching matrix are distributed on two sides (71, 72), the optical switching matrix being adapted to generate connections between each of the ports of the first side and each of the ports of the second side,
wherein the ports of the first side (71) of the single optical spatial switching matrix (70) comprise the plural number P of inputs (45) of the optical protection component of the multidirectional drop device and the first and second inputs (144) of the optical protection component of the multidirectional add device, and wherein the ports of the second side (72) of the single optical spatial switching matrix (70) comprise the plural number P of outputs (145) of the optical protection component of the multidirectional add device and the first and second outputs (44) of the optical protection component of the multidirectional drop device.

## Patentansprüche

1. Optisches Netzwerkelement (100, 200) für ein WDM-Netzwerk, wobei das optische Netzwerkelement umfasst:
Eine Vielzahl P von WDM-Eingängen (10), welche an eine entsprechende Vielzahl P von angrenzenden Knoten des Netzwerks angeschlossen werden können, und
eine mehrdirektionale Drop-Vorrichtung (50, 60), wobei die mehrdirektionale Drop-Vorrichtung einen Empfängerblock (40) umfasst, wobei der Empfängerblock (40) umfasst:
eine Vielzahl von optischen Empfängern (1), welche jeweils für das Demodulieren eines optischen Signals auf einem ausgewählten Wellenlängenkanal ausgelegt sind,
einen optischen Multicast-Schalter (9), welcher eine Vielzahl M von transponderseitigen Ports, die an die Vielzahl von optischen Empfängern (1) angeschlossen sind, und eine Vielzahl N von netzwerkseitigen Ports umfasst, wobei der optische Multicast-Schalter einen jeweiligen optischen Verstärker (7) und einen jeweiligen optischen 1-by-M-Koppler (5), der an einem jeden der N netzwerkseitigen Ports angeordnet ist, und einen jeweiligen räumlichen N-by-1-Selektor (3), welcher an einem jeden der M transponderseitigen Ports angeordnet ist, und eine Vielzahl MxN von optischen Verbindungen (4), welche die M Ausgänge eines jeden optischen Kopplers mit den M räumlichen Selektoren verbinden, umfasst, um eine Vielzahl von optischen Pfaden in Abhängigkeit eines Konfigurationszustands der räumlichen Selektoren herzustellen, wobei jeder optische Pfad dazu ausgelegt ist, optische Signale auf einer Vielzahl von Wellenlängenkanälen zwischen einem ausgewählten der netzwerkseitigen Ports und einem ausgewählten der transponderseitigen Ports zu transportieren,
wobei die netzwerkseitigen Ports (6) des optischen Multicast-Schalters einen Teilsatz von netzwerkseitigen Ports (41), welche an einen jeweiligen der WDM-Eingänge (10) des optischen Netzwerkelements angeschlossen sind, umfassen, um auf der Vielzahl von Wellenlängenkanälen optische Signale von dem entsprechenden angrenzenden Knoten des Netzwerks zu empfangen,
**dadurch gekennzeichnet, dass** die Vielzahl N der netzwerkseitigen Ports höher ist als die Vielzahl P der WDM-Eingänge (10) des optischen Netzwerkelements,
wobei die netzwerkseitigen Ports des optischen Multicast-Schalters einen weiteren netzwerkseitigen Port (42, 44) umfassen, welcher über eine optische Schutzkomponente (43, 61, 70) an alle WDM-Eingänge (10) des optischen Netzwerkelements angeschlossen ist,
wobei die optische Schutzkomponente (43, 61, 70) eine Vielzahl P von Eingängen (45) umfasst, von denen ein jeder an einen jeweiligen der WDM-Eingänge (10) des optischen Netzwerkelements angeschlossen ist, um auf der Vielzahl von Wellenlängenkanälen optische Signale von dem entsprechenden angrenzenden Knoten des Netzwerks zu empfangen, wobei die optische Schutzkomponente dazu ausgelegt ist, die optischen Signale auf der Vielzahl von Wellenlängenkanälen von einem jeden der Eingänge der optischen Schutzkomponente selektiv oder nicht selektiv an den weiteren netzwerkseitigen Port (42, 45) des optischen Multicast-Schalters weiterzureichen.

2. Optisches Netzwerkelement nach Anspruch 1, wobei die optische Schutzkomponente einen optischen Leistungskoppler (43) umfasst, welcher die Vielzahl P von Eingängen aufweist und dazu ausgelegt ist, die optischen Signale auf der Vielzahl von Wellenlängenkanälen von allen Eingängen zusammenzuführen und die zusammengeführten Signale an den weiteren netzwerkseitigen Port (42, 44) des optischen Multicast-Schalters weiterzureichen.

3. Optisches Netzwerkelement nach Anspruch 1, wobei die optische Schutzkomponente (61, 70) einen optischen räumlichen Schalter umfasst, welcher die Vielzahl P von Eingängen aufweist und dazu ausgelegt ist, die optischen Signale auf der Vielzahl von Wellenlängenkanälen von einem ausgewählten der Eingänge (45) an den weiteren netzwerkseitigen Port (44, 42) des optischen Multicast-Schalters weiterzureichen.

4. Optisches Netzwerkelement nach Anspruch 1, wobei die mehrdirektionale Drop-Vorrichtung weiterhin einen zweiten Empfängerblock (40) umfasst, wobei der zweite Empfängerblock (40) umfasst:
eine zweite Vielzahl von optischen Empfängern (1), welche jeweils für das Demodulieren eines optischen Signals auf einem ausgewählten Wellenlängenkanal ausgelegt sind,
einen zweiten optischen Multicast-Schalter (9), welcher eine Vielzahl M von transponderseitigen Ports, die an die zweite Vielzahl von optischen Empfängern (1) angeschlossen sind, und eine Vielzahl N von netzwerkseitigen Ports umfasst, wobei der zweite optische Multicast-Schalter einen jeweiligen optischen Verstärker (7) und einen jeweiligen optischen 1-by-M-Koppler (5), der an einem jeden der N netzwerkseitigen Ports angeordnet ist, und einen jeweiligen räumlichen N-by-1-Selektor (3), welcher an einem jeden der M transponderseitigen Ports angeordnet ist, und eine Vielzahl MxN von optischen Verbindungen (4), welche die M Ausgänge eines jeden optischen Kopplers mit den M räumlichen Selektoren verbinden, umfasst, um eine Vielzahl von optischen Pfaden in Abhängigkeit eines Konfigurationszustands der räumlichen Selektoren herzustellen, wobei jeder optische Pfad dazu ausgelegt ist, optische Signale auf einer Vielzahl von Wellenlängenkanälen zwischen einem ausgewählten der netzwerkseitigen Ports und einem ausgewählten der transponderseitigen Ports zu transportieren,
wobei die netzwerkseitigen Ports (6) des zweiten optischen Multicast-Schalters einen Teilsatz von netzwerkseitigen Ports (41), welche an einen jeweiligen der WDM-Eingänge (10) des optischen Netzwerkelements angeschlossen sind, umfassen, um auf der Vielzahl von Wellenlängenkanälen optische Signale von dem entsprechenden angrenzenden Knoten des Netzwerks zu empfangen,
wobei die Vielzahl N der transponderseitigen Ports höher ist als die Vielzahl P der WDM-Eingänge (10) des optischen Netzwerkelements,
wobei die netzwerkseitigen Ports des zweiten optischen Multicast-Schalters einen weiteren netzwerkseitigen Port (42, 44) umfassen, welcher über eine optische Schutzkomponente (43, 61, 70) an alle WDM-Eingänge (10) des optischen Netzwerkelements angeschlossen ist,
wobei die optische Schutzkomponente (43, 61, 70) einen ersten Ausgang (44), welcher an den weiteren netzwerkseitigen Port (42) des ersten optischen Multicast-Schalters angeschlossen ist, und einen zweiten Ausgang (44), welcher an den weiteren netzwerkseitigen Port (42) des zweiten optischen Multicast-Schalters angeschlossen ist, umfasst,
wobei die optische Schutzkomponente (43, 61, 70) dazu ausgelegt ist, die optischen Signale auf der Vielzahl von Wellenlängenkanälen von einem jeden der Eingänge der optischen Schutzkomponente selektiv oder nicht selektiv an den weiteren netzwerkseitigen Port des optischen Multicast-Schalters weiterzureichen.

5. Optisches Netzwerkelement nach Anspruch 4, wobei die optische Schutzkomponente einen optischen Leistungskoppler (43), welcher die Mehrzahl P von Eingängen (45) und den ersten und zweiten Ausgang umfasst und dazu ausgelegt ist, die optischen Signale auf der Vielzahl von Wellenlängenkanälen von allen Eingängen zusammenzuführen und die zusammengeführten Signale an den weiteren netzwerkseitigen Port (42) sowohl des ersten als auch des zweiten optischen Multicast-Schalters (9) zu broadcasten.

6. Optisches Netzwerkelement nach Anspruch 4, wobei die optische Schutzkomponente eine optische räumliche Schaltmatrix (61, 70), welche die Vielzahl P von Eingängen (45) und den ersten und zweiten Ausgang (44) umfasst, wobei die optische räumliche Schaltmatrix dazu ausgelegt ist, eine Vielzahl von optischen Pfaden in Abhängigkeit von einem Konfigurationszustand herzustellen, wobei jeder optische Pfad fähig ist, optische Signale auf der Vielzahl von Wellenlängenkanälen zwischen einem ausgewählten der Eingänge und einem ausgewählten der Ausgänge zu transportieren.

7. Optisches Netzwerkelement nach einem beliebigen der Ansprüche 1 bis 6, weiterhin umfassend einen jeweiligen mit einem jeden der P WDM-Eingänge (10) des optischen Netzwerkelements assoziierten programmierbaren Demultiplexer (20), wobei der programmierbare Demultiplexer einen ersten Drop-Ausgang (41), welcher an den Teilsatz der netzwerkseitigen Ports eines Empfängerblocks angeschlossen ist, und einen zweiten Drop-Ausgang (45), welcher an einen Eingang der optischen Schutzkomponente (43, 61, 70) angeschlossen ist, aufweist.

8. Optisches Netzwerkelement (100, 200) für ein WDM-Netzwerk, wobei das optische Netzwerkelement eine Vielzahl P von WDM-Ausgängen (11), die an eine entsprechende Vielzahl P von angrenzenden Knoten des Netzwerk angeschlossen werden können, und eine mehrdirektionale Add-Vorrichtung umfasst, wobei die mehrdirektionale Add-Vorrichtung einen Senderblock (140) umfasst,
wobei der Senderblock (140) umfasst:
eine Vielzahl von optischen Sendern (101), welche jeweils für das Erzeugen eines optischen Signals auf einem ausgewählten Wellenlängenkanal ausgelegt sind,
einen optischen Multicast-Schalter (109), welcher eine Vielzahl M von transponderseitigen Ports, die an die Vielzahl von optischen Sendern (101) angeschlossen sind, und eine Vielzahl N von netzwerkseitigen Ports umfasst, wobei der optische Multicast-Schalter einen jeweiligen optischen Verstärker (107) und einen jeweiligen optischen M-by-1-Koppler (105), der an einem jeden der N netzwerkseitigen Ports angeordnet ist, und einen jeweiligen räumlichen 1-by-N-Selektor (103), welcher an einem jeden der M transponderseitigen Ports angeordnet ist, und eine Vielzahl NxM von optischen Verbindungen (104), welche die N Ausgänge eines jeden räumlichen Selektors mit den N optischen Kopplern verbinden, umfasst, um eine Vielzahl von optischen Pfaden in Abhängigkeit eines Konfigurationszustands der räumlichen Selektoren herzustellen, wobei jeder optische Pfad dazu ausgelegt ist, optische Signale auf einer Vielzahl von Wellenlängenkanälen zwischen einem ausgewählten der transponderseitigen Ports und einem ausgewählten der netzwerkseitigen Ports (106) zu transportieren,
wobei die netzwerkseitigen Ports (106) des optischen Multicast-Schalters einen Teilsatz von netzwerkseitigen Ports (141), welche alle an einen jeweiligen der WDM-Ausgänge (11) des optischen Netzwerkelements angeschlossen sind, umfassen, um auf der Vielzahl von Wellenlängenkanälen optische Signale an den entsprechenden angrenzenden Knoten des Netzwerks weiterzureichen,
**dadurch gekennzeichnet, dass** die Vielzahl N der transponderseitigen Ports höher ist als die Vielzahl P der WDM-Ausgänge (11) des optischen Netzwerkelements,
wobei die netzwerkseitigen Ports des optischen Multicast-Schalters einen weiteren netzwerkseitigen Port (142) umfassen, welcher über eine optische Schutzkomponente (70) an alle WDM-Ausgänge (11) des optischen Netzwerkelements angeschlossen ist, wobei die optische Schutzkomponente (70) eine Vielzahl P von Ausgängen (145) umfasst,
von denen ein jeder an einen jeweiligen der WDM-Ausgänge (11) des optischen Netzwerkelements angeschlossen ist, um auf der Vielzahl von Wellenlängenkanälen optische Signale an den entsprechenden angrenzenden Knoten des Netzwerks weiterzureichen, wobei die optische Schutzkomponente dazu ausgelegt ist, die optischen Signale auf der Vielzahl von Wellenlängenkanälen selektiv oder nicht selektiv von dem weiteren netzwerkseitigen Port des optischen Multicast-Schalters an einen jeden der Ausgänge der optischen Schutzkomponente weiterzureichen.

9. Optisches Netzwerkelement nach Anspruch 8, wobei die optische Schutzkomponente einen optischen Splitter umfasst, welcher die Vielzahl P von Ausgängen aufweist und dazu ausgelegt ist, die optischen Signale auf der Vielzahl von Wellenlängenkanälen von dem weiteren netzwerkseitigen Port (142) des optischen Multicast-Schalters an alle Ausgänge (145) zu broadcasten.

10. Optisches Netzwerkelement nach Anspruch 8, wobei die optische Schutzkomponente einen optischen räumlichen Schalter (70) umfasst, welcher die Vielzahl P von Ausgängen (145) aufweist und dazu ausgelegt ist, die optischen Signale auf der Vielzahl von Wellenkanälen von dem weiteren netzwerkseitigen Port des optischen Multicast-Schalters an einen ausgewählten der Ausgänge weiterzureichen.

11. Optisches Netzwerkelement nach Anspruch 8, wobei die multidirektionale Add-Vorrichtung weiterhin einen zweiten Senderblock (140) umfasst,
wobei der zweite Senderblock (140) umfasst:
eine zweite Vielzahl von optischen Sendern (101), welche jeweils für das Erzeugen eines optischen Signals auf einem ausgewählten Wellenlängenkanal ausgelegt sind,
einen zweiten optischen Multicast-Schalter (109), welcher eine Vielzahl M von transponderseitigen Ports, die an die zweite Vielzahl von optischen Sendern (101) angeschlossen sind, und eine Vielzahl N von netzwerkseitigen Ports umfasst, wobei der zweite optische Multicast-Schalter einen jeweiligen optischen Verstärker (107) und einen jeweiligen optischen M-by-1-Koppler (105), der an einem jeden der N netzwerkseitigen Ports angeordnet ist, und einen jeweiligen räumlichen 1-by-N-Selektor (103), welcher an einem jeden der M transponderseitigen Ports angeordnet ist, und eine Vielzahl NxM von optischen Verbindungen (104), welche die N Ausgänge eines jeden räumlichen Selektors mit den N optischen Kopplern verbinden, umfasst, um eine Vielzahl von optischen Pfaden in Abhängigkeit eines Konfigurationszustands der räumlichen Selektoren herzustellen, wobei jeder optische Pfad dazu ausgelegt ist, optische Signale auf einer Vielzahl von Wellenlängenkanälen zwischen einem ausgewählten der transponderseitigen Ports und einem ausgewählten der netzwerkseitigen Ports (106) zu transportieren,
wobei die netzwerkseitigen Ports (106) des zweiten optischen Multicast-Schalters einen Teilsatz von netzwerkseitigen Ports (141), welche alle an einen jeweiligen der WDM-Ausgänge (11) des optischen Netzwerkelements angeschlossen sind, umfassen, um auf der Vielzahl von Wellenlängenkanälen optische Signale an den entsprechenden angrenzenden Knoten des Netzwerks weiterzureichen,
wobei die Vielzahl N der transponderseitigen Ports höher ist als die Vielzahl P der WDM-Ausgänge (11) des optischen Netzwerkelements,
wobei die netzwerkseitigen Ports des zweiten optischen Multicast-Schalters einen weiteren netzwerkseitigen Port (142) umfassen, welcher über die optische Schutzkomponente (70) an alle WDM-Ausgänge (11) des optischen Netzwerkelements angeschlossen ist,
wobei die optische Schutzkomponente (70) einen ersten Eingang (144), an den weiteren netzwerkseitigen Port (142) des ersten optischen Multicast-Schalters angeschlossen ist, und einen zweiten Eingang (144), welcher an den weiteren netzwerkseitigen Port (142) des zweiten optischen Multicast-Schalters angeschlossen ist, umfasst,
wobei die optische Schutzkomponente (70) dazu ausgelegt ist, die optischen Signale auf der Vielzahl von Wellenlängenkanälen selektiv oder nicht selektiv von dem weiteren netzwerkseitigen Port (142) eines jeden der ersten und zweiten optischen Multicast-Schalter an die Ausgänge (145) der optischen Schutzkomponente weiterzureichen.

12. Optisches Netzwerkelement nach Anspruch 11, wobei die optische Schutzkomponente einen optischen Leistungskoppler umfasst, welcher die Vielzahl P von Ausgängen (145) und die ersten und zweiten Eingänge (144) aufweist und dazu ausgelegt ist, die optischen Signale auf der Vielzahl von Wellenlängenkanälen von sowohl dem ersten als auch dem zweiten optischen Multicast-Schalter zusammenzuführen und die zusammengeführten Signale an alle Ausgänge zu broadcasten.

13. Optisches Netzwerkelement nach Anspruch 11, wobei die optische Schutzkomponente eine optische räumliche Schaltmatrix (70), welche die Vielzahl P von Ausgängen (145) und den ersten und zweiten Eingang (144) aufweist, umfasst, wobei die optische räumliche Schaltmatrix dazu ausgelegt ist, eine Vielzahl von optischen Pfaden in Abhängigkeit von einem Konfigurationszustand herzustellen, wobei jeder optische Pfad fähig ist, optische Signale auf der Vielzahl von Wellenlängenkanälen zwischen einem ausgewählten der Eingänge und einem ausgewählten der Ausgänge zu transportieren.

14. Optisches Netzwerkelement nach einem beliebigen der Ansprüche 8 bis 13, weiterhin umfassend einen jeweiligen mit einem jeden der P WDM-Ausgänge (11) des optischen Netzwerkelements assoziierten programmierbaren Multiplexer (30), wobei der programmierbare Multiplexer einen ersten Add-Eingang (141), welcher an den Teilsatz der netzwerkseitigen Ports eines Senderblocks angeschlossen ist, und einen zweiten Add-Eingang (145), welcher an einen Ausgang der optischen Schutzkomponente (70) angeschlossen ist, aufweist.

15. Optischer Knoten (200) für ein WDM-Netzwerk, umfassend ein optisches Netzwerkelement gemäß Anspruch 13 oder 14, kombiniert mit einem optischen Netzwerkelement gemäß Anspruch 6 oder 7, wobei die optische Schutzkomponente sowohl der mehrdirektionalen Add-Vorrichtung als auch der mehrdirektionalen Drop-Vorrichtung aus einer einzelnen optischen räumlichen Schaltmatrix (70) besteht, wobei die Ports der optischen Schaltmatrix auf zwei Seiten (71, 72) verteilt sind, wobei die optische Schaltmatrix dazu ausgelegt ist, Verbindungen zwischen einem jeden der Ports der ersten Seite und einem jeden der Ports der zweiten Seite zu erzeugen,
wobei die Ports der ersten Seite (71) der einzelnen optischen räumlichen Schaltmatrix (70) die Vielzahl P von Eingängen (45) der optischen Schutzkomponente der mehrdirektionalen Drop-Vorrichtung und den ersten und zweiten Eingang (144) der optischen Schutzkomponente der mehrdirektionalen Add-Vorrichtung umfassen, und wobei die Ports der zweiten Seite (72) der einzelnen optischen räumlichen Schaltmatrix (70) die Vielzahl P von Ausgängen (145) der optischen Schutzkomponente der mehrdirektionalen Add-Vorrichtung und den ersten und zweiten Ausgang (44) der optischen Schutzkomponente der mehrdirektionalen Drop-Vorrichtung umfassen.

## Revendications

1. Élément de réseau optique (100, 200) pour un réseau MRL, l'élément de réseau optique comprenant :
un nombre pluriel P d'entrées MRL (10) pouvant être connectées à un nombre pluriel P correspondant de noeuds adjacents du réseau, et
un dispositif d'extraction multidirectionnel (50, 60), le dispositif d'extraction multidirectionnel comprenant un bloc récepteur (40), le bloc récepteur (40) comprenant :
une pluralité de récepteurs optiques (1), chacun étant adapté pour démoduler un signal optique sur un canal de longueur d'onde sélectionné,
un commutateur optique multidiffusion (9) comprenant un nombre pluriel M de ports côté transpondeur connectés à la pluralité de récepteurs optiques (1) et un nombre pluriel N de ports côté réseau, dans lequel le commutateur optique multidiffusion comprend un amplificateur optique respectif (7) et un coupleur optique 1 x M respectif (5) disposés au niveau de chacun des N ports côté réseau et un sélecteur spatial N x 1 respectif (3) disposé au niveau de chacun des M ports côté transpondeur et un nombre pluriel M x N de liaisons optiques (4) connectant les M sorties de chaque coupleur optique aux M sélecteurs spatiaux, de sorte à produire une pluralité de chemins optiques en fonction d'un état de configuration des sélecteurs spatiaux, chaque chemin optique étant adapté pour transporter des signaux optiques sur une pluralité de canaux de longueur d'onde entre un port sélectionné parmi les ports côté réseau et un port sélectionné parmi les ports côté transpondeur,
dans lequel les ports côté réseau (6) du commutateur optique multidiffusion comprennent un sous-ensemble de ports côté réseau (41), chacun étant connecté à une entrée respective parmi les entrées MRL (10) de l'élément de réseau optique pour recevoir des signaux optiques sur la pluralité de canaux de longueur d'onde à partir du noeud adjacent correspondant du réseau,
**caractérisé en ce que** le nombre pluriel N des ports côté réseau est supérieur au nombre pluriel P des entrées MRL (10) de l'élément de réseau optique,
dans lequel les ports côté réseau du commutateur optique multidiffusion comprennent un port côté réseau supplémentaire (42, 44) connecté à toutes les entrées MRL (10) de l'élément de réseau optique par l'intermédiaire d'un composant optique de protection (43, 61, 70),
dans lequel le composant optique de protection (43, 61, 70) comprend un nombre pluriel P d'entrées (45), chacune étant connectée à une entrée respective parmi les entrées MRL (10) de l'élément de réseau optique pour recevoir des signaux optiques sur la pluralité de canaux de longueur d'onde à partir du noeud adjacent correspondant du réseau, dans lequel le composant optique de protection est adapté pour acheminer de manière sélective ou non les signaux optiques sur la pluralité de canaux de longueur d'onde à partir de chacune des entrées du composant optique de protection vers le port côté réseau supplémentaire (42, 45) du commutateur optique multidiffusion.

2. Élément de réseau optique selon la revendication 1, dans lequel le composant optique de protection comprend un coupleur de puissance optique (43) ayant le nombre pluriel P d'entrées et adapté pour fusionner les signaux optiques sur la pluralité de canaux de longueur d'onde à partir de toutes les entrées et pour acheminer les signaux fusionnés vers le port côté réseau supplémentaire (42, 44) du commutateur optique multidiffusion.

3. Élément de réseau optique selon la revendication 1, dans lequel le composant optique de protection (61, 70) comprend un commutateur optique spatial ayant le nombre pluriel P d'entrées et adapté pour acheminer les signaux optiques sur la pluralité de canaux de longueur d'onde à partir d'une entrée sélectionnée parmi les entrées (45) vers le port côté réseau supplémentaire (44, 42) du commutateur optique multidiffusion.

4. Élément de réseau optique selon la revendication 1, dans lequel le dispositif d'extraction multidirectionnel comprend en outre un deuxième bloc récepteur (40),
le deuxième bloc récepteur (40) comprenant
une deuxième pluralité de récepteurs optiques (1), chacun étant adapté pour démoduler un signal optique sur un canal de longueur d'onde sélectionné,
un deuxième commutateur optique multidiffusion (9) comprenant un nombre pluriel M de ports côté transpondeur connectés à la deuxième pluralité de récepteurs optiques (1) et un nombre pluriel N de ports côté réseau, dans lequel le deuxième commutateur optique multidiffusion comprend un amplificateur optique respectif (7) et un coupleur optique 1 x M respectif (5) disposés au niveau de chacun des N ports côté réseau et un sélecteur spatial N x 1 respectif (3) disposé au niveau de chacun des M ports côté transpondeur et un nombre pluriel M x N de liaisons optiques (4) connectant les M sorties de chaque coupleur optique aux M sélecteurs spatiaux, de sorte à produire une pluralité de chemins optiques en fonction d'un état de configuration des sélecteurs spatiaux, chaque chemin optique étant adapté pour transporter des signaux optiques sur une pluralité de canaux de longueur d'onde entre un port sélectionné parmi les ports côté réseau et un port sélectionné parmi les ports côté transpondeur,
dans lequel les ports côté réseau (6) du deuxième commutateur optique multidiffusion comprennent un sous-ensemble de ports côté réseau (41), chacun étant connecté à une entrée respective parmi les entrées MRL (10) de l'élément de réseau optique pour recevoir des signaux optiques sur la pluralité de canaux de longueur d'onde à partir du noeud adjacent correspondant du réseau,
dans lequel le nombre pluriel N des ports côté transpondeur est supérieur au nombre pluriel P des entrées MRL (10) de l'élément de réseau optique,
dans lequel les ports côté réseau du deuxième commutateur optique multidiffusion comprennent un port côté réseau supplémentaire (42, 44) connecté à toutes les entrées MRL (10) de l'élément de réseau optique par l'intermédiaire du composant optique de protection (43, 61, 70),
dans lequel le composant optique de protection (43, 61, 70) comprend une première sortie (44) connectée au port côté réseau supplémentaire (42) du premier commutateur optique multidiffusion et une deuxième sortie (44) connectée au port côté réseau supplémentaire (42) du deuxième commutateur optique multidiffusion,
dans lequel le composant optique de protection (43, 61, 70) est adapté pour acheminer de manière sélective ou non les signaux optiques sur la pluralité de canaux de longueur d'onde à partir de chacune des entrées du composant optique de protection vers le port côté réseau supplémentaire de chacun parmi les premier et deuxième commutateurs optiques multidiffusion.

5. Élément de réseau optique selon la revendication 4, dans lequel le composant optique de protection comprend un coupleur de puissance optique (43) ayant le nombre pluriel P d'entrées (45) et les première et deuxième sorties et adapté pour fusionner les signaux optiques sur la pluralité de canaux de longueur d'onde à partir de toutes les entrées et pour diffuser les signaux fusionnés vers le port côté réseau supplémentaire (42) du premier et du deuxième commutateurs optiques multidiffusion (9).

6. Élément de réseau optique selon la revendication 4, dans lequel le composant optique de protection comprend une matrice de commutation spatiale optique (61, 70) comprenant le nombre pluriel P d'entrées (45) et la première et la deuxième sorties (44), dans lequel la matrice de commutation spatiale optique est adaptée pour produire une pluralité de chemins optiques en fonction d'un état de configuration, chaque chemin optique étant adapté pour transporter des signaux optiques sur la pluralité de canaux de longueur d'onde entre une entrée sélectionnée parmi les entrées et une sortie sélectionnée parmi les sorties.

7. Élément de réseau optique selon l'une quelconque des revendications 1 à 6, comprenant en outre un démultiplexeur programmable respectif (20) associé à chacune des P entrées MRL (10) de l'élément de réseau optique, le démultiplexeur programmable présentant une première sortie d'extraction (41) connectée au sous-ensemble de ports côté réseau d'un bloc récepteur et une deuxième sortie d'extraction (45) connectée à une entrée du composant optique de protection (43, 61, 70).

8. Élément de réseau optique (100, 200) pour un réseau MRL, l'élément de réseau optique comprenant un nombre pluriel P de sorties MRL (11) pouvant être connectées à un nombre pluriel P correspondant de noeuds adjacents du réseau et un dispositif d'insertion multidirectionnel, le dispositif d'insertion multidirectionnel comprenant un bloc émetteur (140),
le bloc émetteur (140) comprenant :
une pluralité d'émetteurs optiques (101), chacun étant adapté pour générer un signal optique sur un canal de longueur d'onde sélectionné,
un commutateur optique multidiffusion (109) comprenant un nombre pluriel M de ports côté transpondeur connectés à la pluralité d'émetteurs optiques (101) et un nombre pluriel N de ports côté réseau, dans lequel le commutateur optique multidiffusion comprend un amplificateur optique respectif (107) et un coupleur optique M x 1 respectif (105) disposés au niveau de chacun des M ports côté réseau et un sélecteur spatial 1 x N respectif (103) disposé au niveau de chacun des M ports côté transpondeur et un nombre pluriel N x M de liaisons optiques (104) connectant les N sorties de chaque sélecteur spatial aux N coupleurs optiques, de sorte à produire une pluralité de chemins optiques en fonction d'un état de configuration des sélecteurs spatiaux, chaque chemin optique étant adapté pour transporter des signaux optiques sur une pluralité de canaux de longueur d'onde entre un port sélectionné parmi les ports côté transpondeur et un port sélectionné parmi les ports côté réseau (106),
dans lequel les ports côté réseau (106) du commutateur optique multidiffusion comprennent un sous-ensemble de ports côté réseau (141), chacun étant connecté à une sortie respective parmi les sorties MRL (11) de l'élément de réseau optique pour acheminer des signaux optiques sur la pluralité de canaux de longueur d'onde vers le noeud adjacent correspondant du réseau,
**caractérisé en ce que** le nombre pluriel N des ports côté transpondeur est supérieur au nombre pluriel P des sorties MRL (11) de l'élément de réseau optique,
dans lequel les ports côté réseau du commutateur optique multidiffusion comprennent un port côté réseau supplémentaire (142) connecté à toutes les sorties MRL (11) de l'élément de réseau optique par l'intermédiaire d'un composant optique de protection (70),
dans lequel le composant optique de protection (70) comprend un nombre pluriel P de sorties (145), chacune étant connectée à une sortie respective parmi les sorties MRL (11) de l'élément de réseau optique pour acheminer des signaux optiques sur la pluralité de canaux de longueur d'onde vers le noeud adjacent correspondant du réseau, dans lequel le composant optique de protection est adapté pour acheminer de protection de manière sélective ou non les signaux optiques sur la pluralité de canaux de longueur d'onde à partir du port côté réseau supplémentaire du commutateur optique multidiffusion vers chacune des sorties du composant optique.

9. Élément de réseau optique selon la revendication 8, dans lequel le composant optique de protection comprend un diviseur de puissance optique ayant le nombre pluriel P de sorties et adapté pour diffuser les signaux optiques sur la pluralité de canaux de longueur d'onde à partir du port côté réseau supplémentaire (142) du commutateur optique multidiffusion vers toutes les sorties (145).

10. Élément de réseau optique selon la revendication 8, dans lequel le composant optique de protection comprend un commutateur optique spatial (70) ayant le nombre pluriel P de sorties (145) et adapté pour acheminer les signaux optiques sur la pluralité de canaux de longueur d'onde à partir du port côté réseau supplémentaire du commutateur optique multidiffusion vers une sortie sélectionnée parmi les sorties.

11. Élément de réseau optique selon la revendication 8, dans lequel le dispositif d'insertion multidirectionnel comprend en outre un deuxième bloc émetteur (140),
le deuxième bloc émetteur (140) comprenant
une deuxième pluralité d'émetteurs optiques (101), chacun étant adapté pour générer un signal optique sur un canal de longueur d'onde sélectionné,
un deuxième commutateur optique multidiffusion (109) comprenant un nombre pluriel M de ports côté transpondeur connectés à la deuxième pluralité d'émetteurs optiques (101) et un nombre pluriel N de ports côté réseau, dans lequel le deuxième commutateur optique multidiffusion comprend un amplificateur optique respectif (107) et un coupleur optique M x 1 respectif (105) disposés au niveau de chacun des N ports côté réseau et un sélecteur spatial 1 x N respectif (103) disposé au niveau de chacun des M ports côté transpondeur et un nombre pluriel N x M de liaisons optiques (104) connectant les N sorties de chaque sélecteur spatial aux N coupleurs optiques, de sorte à produire une pluralité de chemins optiques en fonction d'un état de configuration des sélecteurs spatiaux, chaque chemin optique étant adapté pour transporter des signaux optiques sur une pluralité de canaux de longueur d'onde entre un port sélectionné parmi les ports côté transpondeur et un port sélectionné parmi les ports côté réseau (106),
dans lequel les ports côté réseau (106) du deuxième commutateur optique multidiffusion comprennent un sous-ensemble de ports côté réseau (141), chacun étant connecté à une sortie respective parmi les sorties MRL (11) de l'élément de réseau optique pour acheminer des signaux optiques sur la pluralité de canaux de longueur d'onde vers le noeud adjacent correspondant du réseau,
dans lequel le nombre pluriel N des ports côté transpondeur est supérieur au nombre pluriel P des sorties MRL (11) de l'élément de réseau optique,
dans lequel les ports côté réseau du deuxième commutateur optique multidiffusion comprennent un port côté réseau supplémentaire (142) connecté à toutes les sorties MRL (11) de l'élément de réseau optique par l'intermédiaire du composant optique de protection (70),
dans lequel le composant optique de protection (70) comprend une première entrée (144) connectée au port côté réseau supplémentaire (142) du premier commutateur optique multidiffusion et une deuxième entrée (144) connectée au port côté réseau supplémentaire (142) du deuxième commutateur optique multidiffusion,
dans lequel le composant optique de protection (70) est adapté pour acheminer de manière sélective ou non les signaux optiques sur la pluralité de canaux de longueur d'onde à partir du port côté réseau supplémentaire (142) de chacun parmi les premier et deuxième commutateurs optiques multidiffusion vers les sorties (145) du composant optique de protection.

12. Élément de réseau optique selon la revendication 11, dans lequel le composant optique de protection comprend un coupleur de puissance optique ayant le nombre pluriel P de sorties (145) et les première et deuxième entrées (144) et adapté pour fusionner les signaux optiques sur la pluralité de canaux de longueur d'onde à partir du premier et du deuxième commutateurs optiques multidiffusion et pour diffuser les signaux fusionnés vers toutes les sorties.

13. Élément de réseau optique selon la revendication 11, dans lequel le composant optique de protection comprend une matrice de commutation spatiale optique (70) comprenant le nombre pluriel P de sorties (145) et la première et la deuxième entrées (144), dans lequel la matrice de commutation spatiale optique est adaptée pour produire une pluralité de chemins optiques en fonction d'un état de configuration, chaque chemin optique étant adapté pour transporter des signaux optiques sur la pluralité de canaux de longueur d'onde entre une entrée sélectionnée parmi les entrées et une sortie sélectionnée parmi les sorties.

14. Élément de réseau optique selon l'une quelconque des revendications 8 à 13, comprenant en outre un multiplexeur programmable respectif (30) associé à chacune des P sorties MRL (11) de l'élément de réseau optique, le multiplexeur programmable présentant une première entrée d'insertion (141) connectée au sous-ensemble de ports côté réseau d'un bloc émetteur et une deuxième entrée d'insertion (145) connectée à une sortie du composant optique de protection (70).

15. Noeud optique (200) pour un réseau MRL, comprenant un élément de réseau optique selon la revendication 13 ou 14 combiné à un élément de réseau optique selon la revendication 6 ou 7, dans lequel le composant optique de protection du dispositif d'insertion multidirectionnel et du dispositif d'extraction multidirectionnel est constitué d'une matrice de commutation spatiale optique unique (70), dans lequel les ports de la matrice de commutation optique sont répartis sur deux côtés (71, 72), la matrice de commutation optique étant adaptée pour générer des connexions entre chacun des ports du premier côté et chacun des ports du deuxième côté,
dans lequel les ports du premier côté (71) de la matrice de commutation spatiale optique unique (70) comprennent le nombre pluriel P d'entrées (45) du composant optique de protection du dispositif d'extraction multidirectionnel et la première et la deuxième entrées (144) du composant optique de protection du dispositif d'insertion multidirectionnel, et dans lequel les ports du deuxième côté (72) de la matrice de commutation spatiale optique unique (70) comprennent le nombre pluriel P de sorties (145) du composant optique de protection du dispositif d'insertion multidirectionnel et la première et la deuxième sorties (44) du composant optique de protection du dispositif d'extraction multidirectionnel.
